# EUROPEAN PATENT APPLICATION

(11) **EP 3 620 086 A1**
(43) Date of publication of application: **11.03.2020**
(21) Application number: 18208910.2
(22) Date of filing: 28.11.2018
(51) Int. Cl.: A47J 31/40

(54) **CAPSULES DEVICE FOR THE PREPARATION OF JUICES**

(30) Priority: 07.09.2018 WO PCT/ES2018/070588
(71) Applicant: Quickjuice, S.L., 46018 Valencia (ES)
(72) Inventor: FONS DONET, Enrique, 07181 Calvi (Baleares) (ES)
(74) Representative: Gil-Vega, Victor

(57) **Abstract**

The invention consists of a housing provided with a juice preparation area, and another for dispensing, including a tap, a cup holder, a grid, a housing that holds a capsule of juice concentrate in a liquid or powder state, said capsule having a lower section susceptible to being torn or punctured, and an upper section on which a piston driven by a motor exerts mechanical pressure. The device is provided with a water tank and a mixing chamber. On one side, there is a button or a lever capable of actuating the complete mechanism of operation of the equipment, and in the front part, there is a panel with buttons.

## Description

### PURPOSE OF THE INVENTION

The present invention, as mentioned in the title, consists of an electronic device provided with capsules for the preparation of fruit juices, said capsules may contain a concentrate of different types of fruit, either in liquid or solid state in powder form. The juice obtained from said device is adapted to certain user requirements, such as sugar level, temperature, etc.

The purpose of this invention is to provide a hitherto unknown solution for several disadvantages that will be discussed below, mainly, it is intended to achieve a final result that allows to obtain a fruit juice from capsules at any desired time, in your home or office, in a fast, simple, clean and eco-friendly way.

The device in question provides essential features of novelty and remarkable advantages with respect to the solutions known and used for the same purposes in the current technology.

At present, dispensers of all kinds are widely known, such as those for water, coffee, alcoholic beverages, as well as other types of food-related products. We know the case of coffee makers that are used in homes, offices, hotels and other public spaces. As we know, these appliances allow us to enjoy a good coffee anywhere quickly. But, what about people who would like to have a similar device but instead of coffee they wish to enjoy a delicious fruit juice? We all know the important nutritional benefits provided by fruits and the need to include them in our daily diet. However, until now there was no known device that would allow a user to have a fruit juice prepared as easily and quickly as with a coffee maker, using capsules that allow people to choose the flavour of the juice, as well as other factors such as sugar level or temperature.

It is true that there are several types of juicers to make juices, however, they have the disadvantage of forcing the user to have fruits available, which are very susceptible to spoilage quickly. In addition, the use of these traditional juicers generates a certain level of dirt, they are uncomfortable to use and impractical.

On the other hand, the increase in the use of bottles and containers of increasingly larger juices, has become harmful to the environment, in addition to occupying a greater volume than desirable and generating discomfort when transporting them. is important to bear in mind that any juicer that lacks a capsule-based system will have to be different depending on the type of fruit to be used, which would obviously increase the purchasing costs.

Thus we see that, until now, the possibility of having a device in our home or office that allows a user to prepare a fruit juice of any desired flavour in a quick, practical and clean way, was unknown.

For this reason, the capsule device proposed solves in a fully satisfactory manner the aforementioned problems, providing a series of advantageous and novel features, and without it supposing any loss of its benefits in other aspects.

The proposed invention aims to provide an economic, ecological, practical, simple and user-friendly solution, whose effect would be to have any fruit juice at any time, without getting dirty and without other inconveniences, occupying minimum space and adapted to the user's demands in terms of temperature, sugar, etc.

This invention has its field of application in the small household appliances sector.

### BACKGROUND OF THE INVENTION

In the state of the art we find some documents related to the invention in question, although none of them provides the same advantageous characteristics nor effectively solves the existing inconveniences.

Thus, in document ES 1 027 555 we find an improved device for dispensing the volume of juice, in fruit juice preparation machines, for example, by squeezing oranges or the like, in which the squeezed juice falls directly on a filter grid from which it goes to a collection tank whose outlet to the user is regulated by a solenoid valve that, when activated, produces the juice dispensing, characterized in that, according to the dosing device of the invention, said collecting tank is provided with an overflow which operates in combination with a corresponding float measuring the level of collected juice, both adjustable.

In this document we find a dispensing machine but not a juice preparation machine, which is also not for domestic use due to its large volume and difficult transportation and handling.

On the other hand, document ES 1 043 770 provides a mobile station for dispensing beverages, which uses conventional beverage machines such as automatic coffee machines, juice machines and/or others that usually require a water intake and a drain for their functioning; such mobile station allows the preparation of beverages from these machines without the need of having said drainage and water intake; featuring a piece of furniture in whose upper part the conventional machines are located, while its lower part has a housing, which holds:
- a water tank that connects with the corresponding water inlets of conventional machines through a water supply means and a water pipeline; and
- a waste tank that connects with the corresponding drains of conventional machines through a waste line; so that the corresponding waste falls by gravity to the waste tank from conventional machines, while the water from the water tank is pumped to said machines.

In this document, as in the previous one, we found a machine that is not viable for domestic use, it has large dimensions, and does not provide a preparation based on capsules of concentrate.

In turn, in document ES 2 127 083 there are claimed improvements in the concentrate dispenser for juice suppliers, of which they incorporate independent tanks of syrups and others with water or water supply means, essentially where the regulation of the mixture of concentrate and water is achieved by adjusting the regulator, without touching the venturi or vice versa, as well as both can be graduated simultaneously while, prior to the venturi, a vacuum valve is provided that incorporates air into the airflow circuit of syrup in the section of the duct between the mouth of the concentrate tank and the venturi at the moment that the determined depression level is generated for instantaneous action of the presence detector of the syrup, incorporated in that section, which orders, by means of the processor, the inhibition of the water feed command.

The larger size of this invention, as well as its complexity in manufacturing, make the final product more expensive.

Thus, we see that -until now- a juice capsule device was not known which, due to its novel characteristics, solves the aforementioned inconveniences both in terms of the cited documents and other traditional inventions or machines that we find in the state of the art.

Taking into consideration the cases mentioned and after analysing the conjugated arguments, with the invention proposed in this document, a final result is produced in which significant differentiating aspects are provided compared to the current state of the art, and where a series of advances is provided in the elements already known with their corresponding advantages.

Namely:
- It achieves a machine that not only dispenses juice but also prepares it.
- The preparation is made based on capsules of concentrate, which allows to enjoy different flavours using the same device.
- Its small size makes it suitable for domestic or office use.
- It is very manageable and easy to transport.
- Cleaner, faster and more neatly.
- It is eco-friendly by reducing the use of large bottles and bricks made with conventional plastics, being the proposed material for the capsule biodegradable. In addition, the fact of transporting a concentrated substance, and therefore not diluted, decreases the volume of CO₂ into the atmosphere, thus not penalizing the transport by road of large volumes of aqueous substances.
- It is an easy product to use by people of all ages.
- Its dimensions and simplicity allow a final product of reduced cost.

### DESCRIPTION OF THE INVENTION

The proposed invention includes the following elements:
A parallelepiped housing provided with a juice preparation area, and another for dispensing, the latter formed by a tap, a cup holder and a grid. The preparation section has a housing that holds a capsule of juice concentrate in a liquid or powder state, of the desired fruit flavour, said capsule having a lower section susceptible to being torn or punctured, and an upper section on which a piston driven by a motor exerts mechanical pressure. The device is provided with a water tank and a mixing chamber which receives both the contents of the capsule and water from an injection circuit connected to a compressor for cold and a pump that allows the circulation of water under pressure from the tank, through the cold equipment, and to the mixing chamber. Said mixing chamber is connected to the aforementioned dispensing section.

On one side, there is a button or a lever capable of actuating the complete mechanism of operation of the equipment, that is: the extraction of concentrated juice from the capsules and the injection of water, which may be natural or cold, carrying out the mixture of water and concentrate in the mixing chamber.

In the front part, near the tap, there is a panel with buttons for selecting the level of the final juice characteristics and a temperature selector: natural/ambient or cold.

The use of the device is very simple. The user activates the button or lever to start the device and sets the options available from the button panel. Once this is done, the system opens the capsule housed in the device, a piston acts on it and the contents of the capsule are mixed with water. Once the mixture is ready, the resulting juice passes from the mixing chamber to the cup through the tap.

### BRIEF DESCRIPTION OF THE DRAWINGS

For a better understanding of this specification, a drawing is attached which, as a non-limiting example, describes the preferred realisation of the invention.

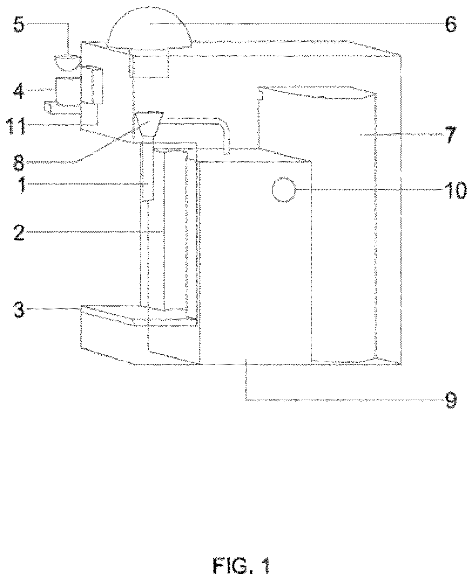

Figure 1: Perspective with section of the invention.

In this figure the following numbered elements stand out:
1. Tap
2. Cup holder
3. Grid
4. Capsule holder
5. Concentrate capsule
6. Motor driven piston
7. Water tank
8. Mixing chamber
9. Cold compressor and pump
10. Button or actuating lever
11. Panel with buttons

### PREFERRED EMBODIMENT OF THE INVENTION

A preferred embodiment of the proposed invention includes the following elements: a parallelepiped housing provided with a juice preparation area, and another for dispensing, the latter formed by a tap (1), a cup holder (2) and a grid (3). The preparation area has a housing (4) which holds a concentrate capsule (5) of juice in liquid or powder state, of the desired fruit flavour, said capsule having a lower section capable of being torn or perforated, and an upper section on which a piston driven by a motor (6) exerts mechanical pressure. The device is provided with a water tank (7) and a mixing chamber (8) to which both the contents of the capsule and water arrive from an injection circuit connected to a cold compressor and a pump (9) that allows the circulation of water under pressure from the tank, through the cold equipment, and up to the mixing chamber (8). Said mixing chamber is connected to the aforementioned dispensing area.

On one side, there is a button or lever (10) capable of actuating the complete mechanism of operation of the equipment, that is: the extraction of concentrated juice from the capsules and the injection of water, which may be natural or cold, carrying out the mixture of water and concentrate in the mixing chamber.

In the front part, near the tap, there is a panel with buttons (11) for selecting the level of the final juice characteristics and a temperature selector: natural/ambient or cold.

The use of the device is very simple. The user activates the button or lever to start the device and sets the options available from the button panel. Once this is done, the system opens the capsule housed in the device, a piston acts on it and the contents of the capsule are mixed with water. Once the mixture is ready, the resulting juice passes from the mixing chamber to the cup through the tap.

## Claims

1. Capsules device for the preparation of juices, **characterised in that** it includes a parallelepiped housing provided with a juice preparation area, and another for dispensing, the latter formed by a tap, a cup holder and a grid, the preparation area having a housing that holds a capsule of juice concentrate in a liquid or powder state, of the desired fruit flavour, said capsule having a lower section susceptible to being torn or punctured, and an upper section on which a piston driven by a motor exerts mechanical pressure, the device being provided with a water tank and a mixing chamber which receives both the contents of the capsule and water from an injection circuit connected to a compressor for cold and a pump, the device having on one side a button or a lever capable of actuating the complete mechanism of operation of the equipment, and in the front part, there is a panel with buttons.
